# EUROPEAN PATENT APPLICATION

(11) **EP 4 227 080 A1**
(43) Date of publication of application: **16.08.2023**
(21) Application number: 21877651.6
(22) Date of filing: 06.10.2021
(51) Int. Cl.: B32B 9/00, C09D 179/04, C09D 1/00

(54) **GAS-BARRIER COATING COMPOSITION AND GAS-BARRIER LAMINATE**

(30) Priority: 06.10.2020 JP 2020168908
(71) Applicant: Toyo Seikan Group Holdings, Ltd., Shinagawa-ku Tokyo 141-8627 (JP)
(72) Inventor: MIYAI, Tomohiro, Yokohama-shi, Kanagawa 240-0062 (JP); TSURUTA, Kazuhiro, Yokohama-shi, Kanagawa 240-0062 (JP); ITOU, Midori, Yokohama-shi, Kanagawa 240-0062 (JP)
(74) Representative: J A Kemp LLP
(86) International application number: PCT/JP2021/036942
(87) International publication number: WO 2022/075352

(57) **Abstract**

The present invention relates to a gas barrier coating material composition containing a metal oxide and a phosphoric acid compound, and provides a coating material composition capable of forming a gas barrier coating film having more excellent oxygen barrier properties and water vapor barrier properties as well as transparency, without causing volatilization of an inorganic acid, by adding a polyvalent metal carboxylate salt soluble in phosphoric acid to a metal oxide and a phosphoric acid compound; and a gas barrier laminate provided with the gas barrier coating film (gas barrier layer).

## Description

### Technical Field

The present invention relates to a gas barrier coating material composition containing a metal oxide, a phosphoric acid compound and a polyvalent metal carboxylate salt soluble in phosphoric acid, and more particularly to a coating material composition which is excellent in oxygen barrier properties and moisture barrier properties and in which generation of an inorganic acid is effectively prevented during formation of a coating film; and a gas barrier laminate containing the coating film.

### Background Art

Gas barrier laminates produced by forming a film containing a metal atom and a phosphorus atom as constituent components on a plastic base have been known in the art.

For example, Patent Document 1 proposes a substantially continuous and substantially amorphous gas transmission prevention film including a metal orthophosphate salt, the metal orthophosphate salt having a metal to phosphorus atomic ratio of about 2.3 to 0.5, in which 50 to 100% of the metal atoms are aluminum, 0 to 50% of the metal atoms are selected from tin, titanium, and zirconium, and 0 to approximately 20% of the metal atoms are selected from zinc, chromium, and magnesium.

However, such a gas transmission prevention film has not yet been satisfactory in terms of its oxygen barrier properties and water vapor barrier properties. Further, the document indicates that a resin is added to improve adhesion to a substrate to be coated, but an effect of improving oxygen and water vapor barrier performance of a coating film by addition of a resin has not been clarified.

To solve such issues, Patent Document 2 describes a composite structural material including a base (X) and a layer (Y) stacked on the base (X), the layer (Y) containing a reaction product (R); the reaction product (R) being a reaction product formed by a reaction at least between a metal oxide (A) and a phosphorus compound (B); in an infrared absorption spectrum of the layer (Y) in a range from 800 to 1400 cm⁻¹, a fraction (n¹) at which infrared absorption reaches maximum being in a range from 1080 to 1130 cm⁻¹; and the metal oxide (A) containing a metal atom (M), which is aluminum.

### Citation List

### Patent Literature

Patent Document 1: JP 57-042032 B
Patent Document 2: JP 4961054 B

### Summary of Invention

### Technical Problem

The composite structural material described in Patent Document 2 satisfies both oxygen barrier properties and water vapor barrier properties, but contains an aluminum oxide as a raw material. Therefore, there is a concern in terms of stability against acids and alkalis of contents.

In order to solve such a problem, the present inventors have proposed a gas barrier coating material composition containing zirconium oxide, a phosphoric acid compound and an amine compound (Japanese Patent Application No. 2020-55007).

Such a gas barrier coating material composition can form a coating film having both oxygen barrier properties and water vapor barrier properties, but has a problem in that an inorganic acid to be added to stabilize a zirconium oxide dispersion volatilizes during formation of a gas barrier coating film and adversely affects the equipment and working environment. In order to solve such a problem, it is conceivable to use zirconium oxide which does not use an inorganic acid as a stabilizer, but, on the other hand, there is another problem: sufficient moisture barrier performance cannot be achieved even though an amine compound is added.

Accordingly, an object of the present invention is to provide a gas barrier coating material composition containing a metal oxide and a phosphoric acid compound, the coating material composition being capable of forming a gas barrier coating film having more excellent oxygen barrier properties and water vapor barrier properties as well as transparency without causing volatilization of an inorganic acid; and a gas barrier laminate provided with the gas barrier coating film (gas barrier layer).

### Solution to Problem

According to a first aspect of the present invention, a gas barrier coating material composition contains a metal oxide, a phosphoric acid compound, and a polyvalent metal carboxylate salt soluble in phosphoric acid.

The gas barrier coating material composition according to the first aspect of the present invention suitably satisfies one or more of the following conditions:
1. the polyvalent metal carboxylate salt is composed of a polyvalent metal ion and an amine compound containing an organic carboxylic acid;
2. the polyvalent metal ion is an aluminum ion;
3. the amine compound is an amino acid;
4. the polyvalent metal carboxylate salt is aluminum glycinate;
5. the metal oxide is zirconium oxide; and
6. the phosphoric acid compound is at least one of orthophosphoric acid, metaphosphoric acid, a polyphosphoric acid, or a cyclic polyphosphoric acid.

According to a second aspect of the present invention, gas barrier laminate includes a coating film provided on a base, the coating film containing the gas barrier coating material composition.

The gas barrier laminate according to the second aspect of the present invention suitably satisfies the following conditions:
1. the coating film is composed of phosphate salt compounds of at least two metals, and has an absorption peak at which infrared absorption reaches maximum in a range from 1000 to 1130 cm⁻¹ in an infrared absorption spectrum;
2. at least one metal oxide is contained in the coating film;
3. the coating film has a peak which reaches maximum in a range from 400 to 405 eV of binding energy of N as measured by XPS;
4. the gas barrier laminate includes an anchor coat layer provided between the base and the coating film; and
5. the gas barrier laminate has an oxygen transmission rate of 25 cc/m²•day•atm (40°C, 90% RH) or less, and a water vapor transmission rate of 5.5 g/m²•day (40°C, 90% RH) or less, in a case where the base is composed of a biaxially stretched polyester with a thickness of 12 µm, the coating film is formed in an applied amount of 1.0 g/m² on the base, and a non-stretched polypropylene film with a thickness of 50 µm is disposed on the coating film.

### Advantageous Effects of Invention

A polyvalent metal carboxylate salt soluble in phosphoric acid is used together with a metal oxide and a phosphoric acid compound in the gas barrier coating material composition according to the first aspect of the present invention, and thus a barrier coating material composition in which metal oxide particles are highly dispersed can be produced without using a large amount of an inorganic acid. As a result, no inorganic acid is volatilized during formation of the coating film, and thus the influence on the equipment can be reduced. Also, a uniform and dense crosslinked structure can be formed by the metal oxide and the phosphoric acid compound, without deterioration in the working environment. Therefore, a coating film capable of exhibiting excellent oxygen barrier properties and water vapor barrier properties can be formed.

In addition, the polyvalent metal carboxylate salt allows the polyvalent metal ion to make up for metal ions to eliminate the shortage of the metal ions, and the amine compound containing the organic carboxylic acid reacts with the metal ions and the phosphoric acid and is incorporated into the crosslinked structure to function as a binder between the metal oxide particles, and thus a coating film having few defects is formed. Therefore, more excellent oxygen barrier properties and water vapor barrier properties can be exhibited in combination with the uniform and dense crosslinked structure described above. As a result, the gas barrier coating material composition of the present invention can provide a gas barrier laminate which is applicable not only to non-retort applications but also to retort sterilization.

In addition, the use of zirconium oxide as a metal compound makes it possible to form a coating film that is stable against acids and alkalis contained in contents, and further excellent oxygen barrier properties and water vapor barrier properties are exhibited.

### Brief Description of Drawings

FIG. 1 is a diagram illustrating a cross-sectional structure of an example of a gas barrier laminate according to an embodiment of the present invention.
FIG. 2 is a diagram illustrating a cross-sectional structure of another example of a gas barrier laminate according to an embodiment of the present invention.

### Description of Embodiments

### Gas Barrier Coating Material Composition

An important feature of the gas barrier coating material composition according to an embodiment of the present invention is that it contains a metal oxide, a phosphoric acid compound, and a polyvalent metal carboxylate salt soluble in phosphoric acid.

As described above, it has been found that, in an embodiment of the present invention, the incorporation of the polyvalent metal carbon salt soluble in phosphoric acid together with the metal oxide and the phosphoric acid compound can improve the dispersibility of metal oxide particles even without incorporation of an inorganic acid, and thus that excellent oxygen barrier properties and water vapor barrier properties can be achieved.

### Metal Oxide

The metal oxide used in the gas barrier coating material composition according to an embodiment of the present invention is suitably an oxide of a divalent or higher valent metal atom, and examples thereof include, but are not limited to, oxides of magnesium, calcium, iron, zinc, aluminum, silicon, titanium, and zirconium, and, among them, zirconium oxide can be suitably used.

The zirconium oxide contains Zr and O as component elements, an amorphous zirconium oxide contains zirconium hydroxide (Zr(OH)₄) and/or zirconyl hydroxide (ZrO(OH)₂) as a main component, and a crystalline zirconium oxide contains a hydrated zirconium oxide (ZrO₂•xH₂O) and/or zirconium oxide (ZrO₂) as a main component. The "main component" means a component contained in a proportion of 50% or greater. The crystallinity of the zirconium oxide and the zirconium oxide formed into a gas barrier coating film can be evaluated by identifying the X-ray peak inherent in crystalline zirconium using a known X-ray structural diffractometer.

In an embodiment of the present invention, either a crystalline or amorphous zirconium oxide (zirconia) can be used as the zirconium oxide.

In general, the zirconium oxide is used in the form of a sol containing zirconium oxide particles as a dispersoid and an inorganic acid such as nitric acid as a stabilizer, but, in an embodiment of the present invention, it is suitable to use a sol of zirconium oxide containing a carbonate salt, an ammonium carbonate salt, an organic dispersant or the like instead of an inorganic acid such as nitric acid, in order to prevent acid volatilization during formation of a coating film due to the incorporation of the inorganic acid, as described above.

A uniform, a dense and defect-free coating film can be formed by blending an amine compound such as aluminum glycinate which will be described later as the polyvalent metal carboxylate salt soluble in phosphoric acid, and thus, even when a crystalline zirconium oxide is used, both oxygen barrier properties and moisture barrier properties equivalent to those in a case of using amorphous zirconium having a large number of hydroxyl groups utilized in a phosphorylation reaction can be provided.

In addition, the zirconium oxide desirably has an average particle size (D50) of the primary particle of 100 nm or less, preferably 50 nm or less, and more preferably 30 nm or less, and this can form a uniform coating film with excellent transparency. The average particle size (D50) is a volume average particle size measured by a laser diffraction scattering method, and D50 is a value of 50% in the particle size distribution based on volume. Using such a zirconium oxide in fine particle form as a raw material enables the gas barrier film to exhibit excellent transparency.

### Phosphoric Acid Compound

Examples of the phosphoric acid compound used in an embodiment of the present invention include orthophosphoric acid, metaphosphoric acid, polyphosphoric acids, phosphorous acid, phosphonic acid, and derivatives thereof. Specific examples of the polyphosphoric acid include pyrophosphoric acid, triphosphoric acid, and polyphosphoric acids in which four or more phosphoric acids are condensed. Examples of the derivatives include salts, (partial) ester compounds, halides (such as chloride), and dehydrates (such as diphosphorus pentoxide) of orthophosphoric acid, metaphosphoric acid, polyphosphoric acids, phosphorous acid and phosphonic acid. In addition, examples of the derivatives of phosphonic acid also include compounds in which a hydrogen atom directly bonded to a phosphorous atom of phosphonic acid (H-P(=O)(OH)₂) is substituted with an alkyl group that may have a functional group of various types (for example, nitrilotris(methylene phosphonic acid) and N,N,N',N'-ethylenediaminetetrakis(methylenephosphonic acid)), and salts, (partial) ester compounds, halides, and dehydrates thereof. Furthermore, an organic polymer having a phosphorus atom, such as a phosphorylated starch, can also be used. These phosphoric acid compounds can be used alone or in combination of two or more.

In an embodiment of the present invention, in particular, at least one of orthophosphoric acid, metaphosphoric acid, polyphosphoric acids, or cyclic polyphosphoric acids is preferably used.

### Polyvalent Metal Carboxylate Salt

As the polyvalent metal carboxylate salt soluble in phosphoric acid used in an embodiment of the present invention, those composed of a polyvalent metal ion and an amine compound containing an organic carboxylic acid can be suitably used. The polyvalent metal ion eluted from the polyvalent metal carboxylate salt dissolved by the phosphoric acid makes up for the shortage of metal ions in a binder between particles in a crosslinked structure of the metal oxide and the phosphoric acid, and thus the oxygen barrier properties and the water vapor barrier properties can be further improved.

The polyvalent metal ion in the polyvalent metal carboxylate salt is not particularly limited as long as a polyvalent metal ion capable of crosslinking a carboxyl group can be provided. Examples of the polyvalent metal ion can include metal ions such as alkaline earth metals (such as magnesium Mg, calcium Ca, strontium Sr, and barium Ba), Group 8 metals (such as iron Fe and ruthenium Ru), Group 11 metals (such as copper Cu), Group 12 metals (such as zinc Zn), and Group 13 metals (such as aluminum Al). The polyvalent metal ion is particularly preferably divalent or trivalent, and can be suitably an aluminum ion. The metal ions can be used alone, or two or more thereof can be used in a combination.

Examples of the amine compound containing an organic carboxylic acid and capable of forming the polyvalent metal carboxylate salt with the polyvalent metal ion can include amino acid compounds having an amino group and a carboxy group.

Examples of the amino acid compound can include: α-amino acids such as glycine, alanine, serine, tryptophan, arginine, glutamic acid, and aspartic acid; β-amino acids such as β-alanine; γ-amino acids such as γ-aminobutyric acid; and polymers of amino acids. One or more of these compounds can be used in combination, and glycine and aspartic acid can be particularly suitably used.

In an embodiment of the present invention, in particular, an aluminum glycinate can be suitably used as the polyvalent metal carboxylate salt.

### Preparation of Composition

The gas barrier coating material composition according to an embodiment of the present invention may be either an aqueous composition or a solvent-based composition as long as it contains the metal oxide, the phosphoric acid compound, and the polyvalent metal carboxylate salt described above, but is suitably an aqueous composition.

In the gas barrier coating material composition, a sol containing metal oxide fine particles as a dispersoid is desirably used as the metal oxide. As described above, in an embodiment of the present invention, it is preferable to use a sol containing metal oxide fine particles as a dispersoid and containing no inorganic acid as a stabilizer.

For the same reason, in the gas barrier coating material composition according to an embodiment of the present invention, it is desirable not to use, as a deflocculant, a volatile and corrosive inorganic acid such as nitric acid, hydrochloric acid or acetic acid, which has been used to improve the dispersibility of metal oxide fine particles and to prepare a dispersion having excellent transparency and viscosity stability.

The phosphoric acid compound, the polyvalent metal carboxylate salt, and the metal zirconium oxide are then mixed in a solvent capable of dissolving the phosphoric acid compound and the polyvalent metal carboxylate salt.

For such an aqueous medium, a known aqueous medium, such as distilled water, ion-exchanged water, or pure water, can be used, and the composition can contain an organic solvent like a known aqueous composition, the organic solvent including an alcohol, a polyhydric alcohol, a derivative thereof, and a ketone. When such a cosolvent is used, the composition can contain from 1 to 90 wt.% of the cosolvent relative to a resin content in the aqueous composition. The composition containing a solvent in the above range improves film-forming performance. Such an organic solvent preferably has amphiphilicity, and examples thereof include methyl alcohol, ethyl alcohol, isopropyl alcohol, n-butanol, methyl ethyl ketone, butyl cellosolve, propylene glycol monopropyl ether, ethylene glycol monobul ether, propylene glycol monomethyl ether, propylene glycol monobutyl ether, dipropylene glycol monomethyl ether, dipropylene glycol monobutyl ether, tripropylene glycol monomethyl ether, 3-methyl-3-methoxybutanol, acetone, and methyl ethyl ketone.

In addition, in an embodiment of the present invention, a generally known dispersion treatment can be carried out in preparation of a coating material for forming the gas barrier laminate. As a method of the dispersion treatment, fine particle pulverization treatment by cavitation using an ultrasonic homogenizer, mechanical dispersion treatment by a disperser using a rotating blade, and dispersion by a mill using glass or zirconia beads are known. In an embodiment of the present invention, these fine dispersion treatments for the coating material can be suitably used.

In the gas barrier coating material composition according to an embodiment of the present invention, the phosphoric acid compound and the polyvalent metal carboxylate salt can be added as long as neither the oxygen barrier properties nor the water vapor barrier properties are impaired.

The phosphoric acid compound is suitably blended with the metal oxide or the polyvalent metal carboxylate salt so that a net intensity ratio P (P-kα)/M (M-kα) of the phosphoric acid compound as measured by X-ray fluorescence measurement is in a range from 0.5 to 20, and, when a zirconium oxide is used as the metal oxide, the phosphoric acid compound is suitably blended so that a net intensity ratio P (P-kα)/Zr (Zr-kα) of the zirconium oxide to the phosphoric acid compound as measured by X-ray fluorescence measurement is in a range from 1.0 to 8.0, particularly in a range from 2.0 to 7.0. When an aluminum salt is used as the polyvalent metal carboxylate salt, the aluminum salt and the phosphoric acid compound are suitably blended so that the net intensity ratio P (P-kα)/Al (Al-kα) of the aluminum salt to the phosphoric acid compound as measured by X-ray fluorescence measurement is in a range from 0.1 to 12.0, particularly in a range from 3.0 to 8.0.

In the gas barrier coating material composition, the amount of the polyvalent metal carboxylate salt to be added varies depending on the type of the polyvalent metal carboxylate salt to be used and cannot be defined unconditionally, but is suitably added in an amount from 1 to 300 parts by mass, particularly from 5 to 50 parts by mass, based on 100 parts by mass of the metal oxide. When the added amount is less than the above range, the action and effect achieved by adding the polyvalent metal carboxylate salt cannot be sufficient as compared with the case where the added amount is in the above range, and, even when the added amount is more than the above range, a further effect cannot be achieved, and, besides, there is a possibility that a defect is generated in the barrier structure of the coating film as compared with the case where the added amount is in the above range.

In addition to the above components, the gas barrier coating material composition can also contain a crosslinking agent, a metal complex, a macromolecular compound, a filler, a plasticizer, an antioxidant, an ultraviolet absorber, a flame retardant, a colorant, or the like.

### Gas Barrier Coating Film

The gas barrier coating film formed from the gas barrier coating material composition according to an embodiment of the present invention is composed of the metal oxide, the phosphoric acid compound and the polyvalent metal carboxylate salt described above. Specifically, a phosphoric acid ester bond is formed and the metal oxide and the phosphoric acid compound are cross-linked, whereby a dense cross-linked structure can be formed. The amine compound containing an organic carboxylic acid in the polyvalent metal carboxylate salt reacts with a metal ion and phosphoric acid to form an ammonium salt compound, which is incorporated into the crosslinked structure, or the amine compounds are condensed to form a polyamide, thereby forming a composite structural material.

Therefore, the coating film composed of the gas barrier coating material composition according to an embodiment of the present invention is characterized by having an absorption peak at which the infrared absorption reaches maximum in a range from 1000 to 1130 cm⁻¹ in an infrared absorption spectrum in a range from 800 to 1400 cm⁻¹ as measured by FT-IR measurement of the coating film alone, and also having a maximum peak in a range (from 400 to 405 eV) of binding energy of nitrogen (N) as measured by X-ray photoelectron spectroscopy (XPS) of the gas barrier coating film alone. The formation of the polyamide can be confirmed from the infrared absorption wave length of 1650 cm⁻¹ by FT-IR.

In the coating film formed from the gas barrier coating material composition according to an embodiment of the present invention, the net intensity ratio P (P-kα)/M (M-kα) of the metal oxide or polyvalent metal carboxylate salt and the phosphoric acid compound as measured by X-ray fluorescence measurement is preferably in a range from 0.5 to 20; in a range from 1.0 to 8.0, particularly in a range from 2.0 to 7.0 when the metal oxide is zirconium oxide; and in a range from 0.1 to 12.0, particularly in a range from 3.0 to 8.0 when the polyvalent metal carboxylate salt is aluminum salt. With the net intensity ratio P (P-kα)/M (M-kα) in the above range, the phosphoric acid compound efficiently reacts, without excess or deficiency, with the hydroxyl groups of the metal oxide in the coating film, which enables a uniform and dense coating film to be formed and excellent oxygen barrier properties and water vapor barrier properties to be exhibited. That is, if the net intensity ratio by X-ray fluorescence measurement is smaller than the above range, meaning the phosphoric acid compound is deficient, bonding between the metal atom particles would be insufficient, the amount of hydroxyl groups present on the surface of the metal atom particles would increase, and this may reduce the oxygen barrier properties and water vapor barrier properties. On the other hand, if the net intensity ratio of X-ray fluorescence measurement is greater than the above range and the phosphoric acid compound is in excess, the amount of hydroxyl groups derived from phosphate groups would increase, and this may also reduce the oxygen barrier properties and water vapor barrier properties.

### Gas Barrier Laminate

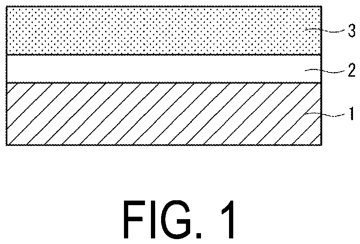

A gas barrier laminate according to an embodiment of the present invention is a laminate in which the gas barrier layer composed of the gas barrier coating film described above is formed on at least one surface of a base, and preferably, as illustrated in FIG. 1, a gas barrier layer 3 is formed on a base 1 via an anchor coat layer 2 described below. The anchor coat layer 2 is a coating film with excellent adhesion to a plastic base 1; forming the gas barrier layer on this coating film significantly improves interlayer adhesion between the gas barrier layer and the plastic base and can effectively prevent peeling of the gas barrier layer from the base also when the gas barrier laminate is subjected to retort sterilization.

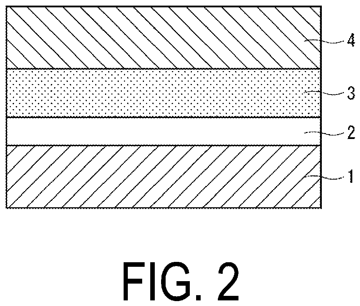

In addition, in the gas barrier laminate according to an embodiment of the present invention, as illustrated in FIG. 2, a moisture resistant resin layer 4 including a thermoplastic resin, such as a non-stretched polypropylene resin film, is preferably formed on the gas barrier layer 3.

The gas barrier laminate according to an embodiment of the present invention includes a gas barrier layer itself having sufficient gas barrier performance, particularly oxygen barrier properties and water vapor barrier properties, and has excellent oxygen barrier properties and retort resistance with an oxygen transmission rate (in accordance with JIS K-7126) of 25 cc/m²•day•atm (40°C, 90% RH) or less and a water vapor transmission rate of 5.5 g/m²•day (40°C, 90% RH) or less in the case where the gas barrier laminate includes a base film containing a biaxially stretched polyester with a thickness of 12 µm, the gas barrier film (gas barrier layer) in an applied amount of 1.0 g/m², and a non-stretched polypropylene film with a thickness of 50 µm.

In addition, the gas barrier laminate of the above configuration has excellent transparency with a total light transmittance of 85% or higher and a haze of 30% or less.

### Base

For the base of the gas barrier laminate, a base known in the art containing a resin, such as a thermoplastic resin or a thermosetting resin; paper; or a fiber, such as a non-woven fabric, can be used, but preferably, examples can include films; sheets; or any packaging materials in a shape, such as a bottle, a cup, a tray, or a can; manufactured from a thermoformable thermoplastic resin by means, such as extrusion molding, injection molding, blow molding, stretch blow molding, or press molding.

Examples of the thermoplastic resin forming the base can include olefin-based copolymers, such as low-, medium-, or high-density polyethylenes, linear low-density polyethylenes, polypropylenes, ethylene-propylene copolymers, ethylene-1-butene copolymers, ionomers, ethylene-vinyl acetate copolymers, and ethylene-vinyl alcohol copolymers; polyesters, such as polyethylene terephthalates, polybutylene terephthalates, polyethylene terephthalates/isophthalates, and polyethylene naphthalates; polyamides, such as nylon 6, nylon 6,6, nylon 6,10, and meta-xylylene adipamide; styrene-based copolymers, such as polystyrenes, styrene-butadiene block copolymers, styrene-acrylonitrile copolymers, and styrene-butadiene-acrylonitrile copolymers (ABS resins); vinyl chloride-based copolymers, such as polyvinyl chlorides and vinyl chloride-vinyl acetate copolymers; acrylic-based copolymers, such as poly(methyl methacrylate)s and methyl methacrylate-ethyl acrylate copolymers; and polycarbonates.

In an embodiment of the present invention, in particular, a sheet composed of a polyethylene terephthalate, a polybutylene terephthalate, or a polypropylene can be preferably used.

These thermoplastic resins may be used alone or may be present in the form of a blend of two or more, or different resins may be present in the form of a laminate. In addition, the plastic base body may have a single-layer configuration or a laminate configuration of two or more layers, for example, by simultaneous melt extrusion or other laminations.

To the melt-formable thermoplastic resin can be added as desired, one, or two or more of additives, such as a pigment, an antioxidant, an antistatic agent, an ultraviolet absorber, or a lubricant, in a total amount within a range of 0.001 parts to 5.0 parts relative to 100 parts by mass of a resin.

Furthermore, for example, to reinforce this container, one, or two or more of a fiber reinforcing material, such as a glass fiber, an aromatic polyamide fiber, a carbon fiber, a pulp, or a cotton linter; or a powder reinforcing material, such as a carbon black or white carbon; or a flake reinforcing material, such as a glass flake or an aluminum flake; can be blended in a total amount of 2 to 150 parts by mass relative to 100 parts by mass of the thermoplastic resin. Moreover, for the purpose of increasing the volume, one, or two or more of a heavy or soft calcium carbonate, mica, talc, kaolin, gypsum, clay, barium sulfate, an alumina powder, a silica powder, magnesium carbonate, or the like can be blended according to a formulation known per se in a total amount of 5 to 100 parts by mass relative to 100 parts by mass of the thermoplastic resin.

Still more, for the purpose of improving the gas barrier properties, a scaly inorganic fine powder, such as, for example, water-swelling mica or clay, may be blended according to a formulation known per se in a total amount of 5 to 100 parts by mass relative to 100 parts by mass of the thermoplastic resin without any limitation.

Similarly, for the purpose of improving the gas barrier properties, an inorganic-based thin film layer of, for example, silicon oxide or aluminum oxide may be provided on the plastic base physically or chemically using a vapor deposition method without any limitation.

In addition, the base may be a molded product, such as a final film, sheet, or container, or this coating can also be provided in advance to a preformed product to be formed into a container. Examples of such a preformed body can include bottomed or bottomless tubular parisons for biaxial stretch blow molding, pipes for plastic container molding, sheets for vacuum forming, pressure forming, and plug-assist forming, or films for heat seal lids or bag making.

### Anchor Coat Layer

As the anchor coat layer formed on the base surface as necessary, an anchor coat layer used in the gas barrier laminate can be used, and an anchor coat layer composed of a known polyurethane-based resin formed by combining a hydroxyl group-containing compound serving as a main component such as an acrylic resin or a polyol and an isocyanate-based curing agent, or an anchor coat layer formed by further blending a silane coupling agent can be suitably used.

### Polyurethane-based Resin

As the polyurethane-based resin forming the anchor coat layer, it is possible to use a polyurethane-based resin composed of a hydroxyl group-containing compound serving as a main component such as a known acrylic resin or a polyol which has been used as an anchor coat layer, and an isocyanate compound.

In an embodiment of the present invention, it is desirable to use a polyurethane-based resin having a glass transition temperature (Tg) of 80°C or higher, particularly in a range from 80 to 120°C. When the polyurethane-based resin has a glass transition temperature lower than the above range, the anchor coat layer would have poor heat resistance as compared with that when the polyurethane-based resin has a glass transition temperature in the above range, and the gas barrier layer would have a crack when the gas barrier coating film shrinks due to heating during drying of the gas barrier layer, and this may reduce the barrier properties.

As the acrylic resin, a polymer and a copolymer synthesized by solution polymerization or suspension polymerization using a known radical initiator or the like can be used.

The glass transition temperature of the acrylic resin is preferably from -50°C to 100°C and more preferably from 40°C to 100°C. In addition, the number average molecular weight of the acrylic resin is preferably from 50 to 100000 and more preferably from 50 to 80000. The hydroxyl value of the acrylic resin is preferably from 10 to 200 mgKOH/g, and more preferably from 80 to 180 mgKOH/g.

Examples of a monomer for forming the copolymer include, but are not particularly limited, methyl acrylate, ethyl acrylate, methyl methacrylate, ethyl methacrylate, acrylic acid, methacrylic acid, itaconic acid, maleic acid, 2-hydroxyethyl methacrylate, tert-butyl acrylate and the like, and they can be used to combine as necessary for forming the copolymer.

The polyol can be exemplified by glycols, polyester polyols, polyether polyols, acrylic polyols, or their urethane-modified products, but, in particular, acrylic polyols or glycols are preferably used.

The glass transition temperature of the polyester polyol is preferably from -50 to 100°C and more preferably from -20°C to 80°C. In addition, the number average molecular weight of these polyester polyols is preferably from 50 to 100000 and more preferably from 50 to 80000.

Examples of the glycol include ethylene glycol, propylene glycol, diethylene glycol, butylene glycol, neopentyl glycol, and 1,6-hexanediol.

For the isocyanate component, which is a curing agent for the polyurethane-based resin, an aromatic diisocyanate, an aromatic-aliphatic diisocyanate, an alicyclic diisocyanate, an aliphatic diisocyanate, or the like can be used.

The aromatic diisocyanate can be exemplified by a tolylene diisocyanate (2,4- or 2,6-tolylene diisocyanate, or their mixtures) (TDI), a phenylene diisocyanate (m-, p-phenylene diisocyanate or their mixtures), 4,4'-diphenyl diisocyanate, 1,5-naphthalene diisocyanate (NDI), a diphenylmethane diisocyanate (4,4'-, 2,4'-, or 2,2'-diphenylmethane diisocyanate, or their mixtures) (MDI), 4,4'-toluidine diisocyanate (TODI), and 4,4'-diphenyl ether diisocyanate.

The aromatic aliphatic diisocyanate can be exemplified by a xylene diisocyanate (1,3- or 1,4-xylene diisocyanate, or their mixtures) (XDI), a tetramethylxylene diisocyanate (1,3- or 1,4-tetramethylxylene diisocyanate, or their mixtures) (TMXDI), and ω,ω'-diisocyanate-1,4-diethylbenzene.

Examples of the alicyclic diisocyanate can include 1,3-cyclopentene diisocyanate, a cyclohexane diisocyanate (1,4-cyclohexane diisocyanate or 1,3-cyclohexane diisocyanate), 3-isocyanatomethyl-3,5,5-trimethylcyclohexyl isocyanate (isophorone diisocyanate, IPDI), a methylene bis(cyclohexyl isocyanate) (4,4'-, 2,4'-, or 2,2'-methylene bis(cyclohexyl isocyanate)) (hydrogenated MDI), a methylcyclohexane diisocyanate (methyl-2,4-cyclohexane diisocyanate or methyl-2,6-cyclohexane diisocyanate), and a bis(isocyanatomethyl)cyclohexane (1,3- or 1,4-bis(isocyanatomethyl)cyclohexane, or their mixtures) (hydrogenated XDI).

Examples of the aliphatic diisocyanate can include trimethylene diisocyanate, 1,2-propylene diisocyanate, butylene diisocyanate (tetramethylene diisocyanate, 1,2-butylene diisocyanate, 2,3-butylene diisocyanate, or 1,3-butylene diisocyanate), hexamethylene diisocyanate, pentamethylene diisocyanate, 2,4,4- or 2,2,4-trimethylhexamethylene diisocyanate, and 2,6-diisocianatomethyl caffeate.

The polyisocyanate component that can also be used include: a polyfunctional polyisocyanate compound, such as isocyanurate, biuret, or allophanate, derived from the polyisocyanate monomer; or a polyfunctional polyisocyanate compound containing a terminal isocyanate group obtained by a reaction with a trifunctional or higher polyol compound, such as trimethylolpropane or glycerin.

The polyisocyanate component preferably has a glass transition temperature (Tg) of 50°C or higher and a number average molecular weight (Mn) of 400 or greater, and in particular, a glass transition temperature (Tg) of 60°C or higher and a number average molecular weight (Mn) of 500 or greater.

In an embodiment of the present invention, among the above isocyanate components, a xylene diisocyanate is preferably used.

### Silane Coupling Agent

For the silane coupling agent used in the anchor coat layer, an epoxy silane-based coupling agent can be preferably used.

Such an epoxy silane-based coupling agent that can be used include β-(3,4-epoxycyclohexyl)ethyltrimethoxysilane, 3-glycidoxypropylmethyldimethoxysilane, 3-glycidoxypropylmethyldiethoxysilane, 3-glycidoxypropyltriethoxysilane, and 3-glycidoxypropyltrimethoxysilane.

Other examples of the silane coupling agent include tetramethoxysilane, tetraethoxysilane, 3-aminopropyltrimethoxysilane, 3-aminopropyltriethoxysilane, and 3-isocyanatopropyltriethoxysilane, which can be used as necessary.

In addition, for the purpose of improving hot water resistant adhesion, these silane coupling agents can be subjected to hydrolysis to allow the condensation reaction to proceed. Such silane coupling agents may be used.

### Composition for Forming Anchor Coat Layer

In an embodiment of the present invention, a composition for forming an anchor coat layer preferably contains the polyurethane-based resin or further the silane coupling agent. In addition, the composition for forming an anchor coat layer may be either a water-based or solvent-based composition; however, the composition is desirably an aqueous composition from the perspective of the working environment, and the polyurethane-based resin to be used is desirably a water-soluble or water-dispersible polyurethane.

The composition for forming an anchor coat layer preferably contains an epoxy silane compound in an amount of 1 to 80 parts by mass relative to 100 parts by mass of the polyurethane-based resin (solid content). The composition containing the epoxy silane compound in an amount less than the above range would fail to satisfy crack resistance performance during drying compared to the composition containing the epoxy silane compound in an amount in the above range; on the other hand, the composition containing the epoxysilane compound in an amount greater than the above range would have a difficulty in further improving the adhesion and the crack resistance and is inferior also from the perspective of economy.

In addition, for an aqueous medium, the composition for forming an anchor coat layer can contain an aqueous medium known in the art or an organic solvent, such as an alcohol, a polyhydric alcohol, or a derivative of them, which are similar to those used in the composition for forming a gas barrier layer.

In addition to the above components, the composition for forming an anchor coat layer may contain a known component, such as a curing accelerator catalyst; a filler; a softener; an anti-aging agent; a stabilizer; an adhesion promoter; a leveling agent; an antifoaming agent; a plasticizer; an inorganic filler; a tackifying resin; a fiber; a colorant, such as a pigment; or a usable time extender.

### Method of Manufacturing Gas Barrier Laminate

In a method of manufacturing a gas barrier laminate according to an embodiment of the present invention, the gas barrier coating material composition according to an embodiment of the present invention can be applied directly to at least one surface of the base described above, but preferably, the composition for forming an anchor coat layer is applied prior to applying the gas barrier coating material composition.

The amount of the composition for forming an anchor coat layer applied is determined according to the contents of the polyurethane-based resin and the silane coupling agent in the composition and may not be specified unconditionally, but the composition is preferably applied to be in a range from 0.05 to 1.00 g/m² and particularly from 0.10 to 0.50 g/m² based on a solid content weight of the coating film. The anchor coat applied in an amount less than the above range may fail to adhere the anchor coat layer to the base compared to the anchor coat applied in an amount in the above range; on the other hand, the anchor coat applied in an amount greater than the above range would reduce economic efficiency.

The composition for forming an anchor coat layer applied onto the base body is dried at a temperature from 80 to 150°C for 1 to 60 seconds to remove a solvent in the composition although the conditions depend on the composition to be used and the applied amount. This enables the anchor coat layer to be formed economically without affecting the base even if the base includes a plastic with a low melting point, such as a polypropylene.

The gas barrier coating material composition is then applied onto the composition for forming an anchor coat layer in a dry state after the solvent removal. The amount of the gas barrier coating material composition applied is determined according to the contents of the metal oxide, the phosphoric acid compound and the polyvalent metal carboxylate salt in the composition and may not be specified unconditionally, but the composition is preferably applied to be in a range from 0.05 to 3.0 g/m² and particularly from 0.1 to 1.0 g/m² based on a solid content weight of the coating film. The composition applied in an amount less than the above range would fail to provide sufficient barrier properties. On the other hand, the composition applied in an amount greater than the above range would only reduce economic efficiency but provide no special advantage.

The gas barrier coating material composition is then heated at a temperature of 80 to 220°C, particularly of 140 to 220°C, for 1 second to 10 minutes to form the gas barrier layer although the conditions depend on the makeup of the metal oxide, the phosphoric acid compound and the polyvalent metal carboxylate salt in the composition to be used and the applied amount. This reduces a difference in contraction due to heating of the gas barrier layer and the anchor coat layer and can improve the cracking resistance of the gas barrier layer as well as significantly improve the interlayer adhesion between the gas barrier layer and the anchor coat layer, and prevents peeling of the gas barrier layer from the base also when the gas barrier laminate is subjected to retort sterilization.

The application and drying or heating of the composition for forming an anchor coat layer and the gas barrier coating material composition can be performed by methods known in the art.

The application method is not limited to the following, but the compositions can be applied, for example, by spray coating, immersion, or a bar coater, a roll coater, or a gravure coater.

In addition, the drying or heating can be performed by oven drying (heating), infrared heating, high-frequency heating, or the like.

### Examples

The present invention will be further described by the following examples, but the present invention is not limited in any way by the following examples. Various measurement methods and evaluation methods of the Examples and Comparative Examples are as follows.

### Example 1

As a main component of the gas barrier coating material composition, a zirconium oxide sol (available from Daiichi Kigenso Kagaku Kogyo Co., Ltd., zirconia sol ZSL-00120B (crystalline zirconium oxide, tetragonal crystal system, carbonate salt as a dispersion stabilizer, solid content (in terms of ZrO₂) = 20%) was used. First, water and isopropanol were added to the zirconium oxide sol for dilution. Next, an additive solution was prepared by mixing 100 phr of the solid content (in terms of ZrO₂) of the zirconium-oxide sol with water, 50 phr of phosphoric acid (75%, available from Wako Pure Chemical Industries, Ltd.) in terms of a non-volatile content of phosphoric acid, and 29 phr of aluminum glycinate (available from Tokyo Chemical Industry Co., Ltd.) as a polyvalent metal carboxylate salt. Finally, the additive solution was added to the diluted solution of the zirconium oxide sol, followed by stirring for a predetermined time. A gas barrier coating material composition was prepared so as to have a coating solid content of 12% and a water/isopropanol ratio of 80/20.

### Method for Producing Gas Barrier Laminate Sample

A gas barrier laminate sample was implemented as follows using the barrier gas barrier coating material composition produced. The gas barrier coating material composition was applied onto a base of a biaxially stretched polyester film with a thickness of 12 µm (Lumirror P60, available from Toray Advanced Film Co., Ltd.) using a bar coater so that the applied amount was 1.3 g/m², and heated and dried at a temperature of 220°C for 10 minutes in a box oven, and a gas barrier laminate sample was produced.

### Method for Producing Laminate Sample for Gas Barrier Property Evaluation

As of a laminate sample for gas barrier property evaluation, a urethane-based adhesive (TAKENATE A-315/TAKENATE A-50, available from Mitsui Chemicals, Inc.) was applied using a bar coater in an applied amount of 4.0 g/m², onto a surface of the gas barrier laminate described above which was applied with the gas barrier coating material composition, and dried using a dryer, and then a non-stretched polypropylene film with a thickness of 50 µm (TORAYFAN ZK401, available from Toray Advanced Film Co., Ltd.) was laminated to produce a laminate for gas barrier property evaluation.

### Example 2

As an anchor coat layer, an anchor coat coating material composition A was prepared by blending 3-glycidoxytrimethoxysilane (available from Tokyo Chemical Industry Co., Ltd.) with 100 phr of a water-dispersible polyurethane resin (TAKELAC WPB341, solid content = 30%, Tg = 115°C, available from Mitsui Chemicals, Inc.) so as to attain 30 phr, diluting the mixture with pure water so as to attain a solid content of 8.0%, and stirring the diluted solution. The resultant anchor coat coating material composition A was applied using a bar coater so that the applied amount was 0.20 g/m², and dried at 140°C for 1 minute.

Furthermore, a gas barrier layer was formed on the anchor coat layer in the same manner as in Example 1 except that the applied amount was 2.0 g/m², and a gas barrier laminate and a laminate for gas barrier property evaluation were produced.

### Example 3

As an anchor coat layer, an anchor coat coating material composition B was prepared by blending a polyisocyanate curing agent (TAKENATE D-110N, solid content = 75%, TPI adduct type of meta-xylene diisocyanate) with 100 phr of an acrylic resin (ACRYNAL TZ #9515, Tg = 83°C, solid hydroxyl value = 180 mgKOH/g, available from Toei Kasei Co., Ltd.) so as to attain 40 phr, further diluting the mixture with a mixture of 2-butanone and ethyl acetate having a ratio of 70/30 so as to attain a solid content of 4.0%, and stirring the diluted solution. The resultant anchor coat coating material composition B was applied using a bar coater so that the applied amount was 0.25 g/m², and dried and heat-treated at 140°C for 1 minute.

Furthermore, a gas barrier layer was formed on the anchor coat layer in the same manner as in Example 1 except that the applied amount was 1.9 g/m², and a gas barrier laminate and a laminate for gas barrier property evaluation were produced.

### Example 4

A gas barrier laminate and a laminate for gas barrier property evaluation were produced in the same manner as in Example 2 except that the applied amount was changed to 2.1 g/m². Two sheets of the resultant laminate for gas barrier property evaluation were opposed to each other and heat-sealed, and a three side-sealed pouch having a seal width of 5 mm (130 cm × 170 cm) was prepared. The resultant pouch was filled with 200 g of pure water and subjected to a heat sterilization treatment at 121°C for 30 minutes in a retort device, a sample was cut out, and a laminate for gas barrier property evaluation after the retort treatment was produced.

### Comparative Example 1

A gas barrier laminate and a laminate for gas barrier property evaluation were produced in the same manner as in Example 1, except that the amount of phosphoric acid blended in the gas barrier coating material composition was 51 phr, that no aluminum glycinate was added, and that the applied amount was 1.1 g/m².

### Comparative Example 2

A gas barrier laminate and a laminate for gas barrier property evaluation were produced in the same manner as in Example 1, except that the polyvalent metal carboxylate salt of the gas barrier coating material composition used was 48 phr of glycine instead of aluminum glycinate, and that the applied amount was changed to 1.1 g/m².

### Reference Example 1

A gas barrier laminate and a laminate for gas barrier property evaluation were produced in the same manner as in Example 1, except that a zirconium oxide sol (ZSL-00120A, available from Daiichi Kigenso Kagaku Kogyo Co., Ltd., crystalline zirconium oxide, tetragonal crystal system, nitric acid as a dispersion stabilizer, solid content = 30%) was used as the metal oxide, that the amount of phosphoric acid added was 54 phr, and that the thickness of the coating film was changed to 1.0 g/m².

### Reference Example 2

A laminate for gas barrier property evaluation was produced in the same manner as in Example 1, except that the gas barrier coating material composition was not applied and that a biaxially stretched polyester film with a thickness of 12 µm (Lumirror P60, available from Toray Advanced Film Co., Ltd.) was used as a base.

### Evaluation method

Evaluation results of the gas barrier laminates and the laminates for gas barrier property evaluation were obtained as shown in Table 2 using the following evaluation methods.

### Oxygen Transmission Rate

Each of the laminates for gas barrier property evaluation produced in Examples, Comparative Examples and Reference Examples was measured using an oxygen transmission rate measuring device (OX-TRAN2/21, available from Modern Control Inc.). The measurement conditions were set at a temperature of 40°C and a relative humidity of 90%.

### Water Vapor Transmission Rate

Each of the laminates for gas barrier property evaluation produced in Examples, Comparative Examples and Reference Examples was measured using a water vapor transmission rate measuring device (PERMATRAN-W 3/31, available from Modern Control Inc.). The measurement conditions were set at a temperature of 40°C and a relative humidity of 90%.

### Infrared Absorption Spectrum

For each of the gas barrier laminates produced in Examples and Comparative Examples, the infrared absorption spectrum of the gas barrier coating film applied onto the polyester base was measured using a Fourier transform infrared spectrophotometer (FT/IR-6600, available from JASCO Corporation). When the spectrum of the plastic film used as the base interfered, this was subtracted by the difference spectrum for correction.

**Measurement Conditions of FT-IR Device**

| | |
|---|---|
| Apparatus used: | FT/IR-6600 available from JASCO |
| Measurement conditions: | Method: ATR (Ge prism) |
| | Detector: MCT |
| | Attachment: Thunder Dome |
| | Wave number range: 800 to 1400 cm⁻¹ |
| | Film measurement surface: barrier coating film surface |

### X-ray Fluorescence Evaluation

As a method for evaluating a metal element contained in each of the gas barrier laminates produced in Examples and Comparative Examples, the phosphorus element and the zirconium element were quantified by a commercially available X-ray fluorescence analyzer. The net intensity obtained in the measurement of each of the gas barrier laminates was used to calculate a content ratio of metal elements in the coating film for P and Zr and Al as P/Zr and P/Al, which was used for evaluation. Al detected as a coating film component through X-ray fluorescence measurement was evaluated as good.

**Measurement Conditions of X-ray Fluorescence Analyzer**

| | |
|---|---|
| Apparatus used: | ZSX100e available from Rigaku Electrical Co., Ltd. |
| Measurement conditions: | measurement target: Zr-Kα ray, P-Kα ray, Al-Kα ray |
| | Measuring diameter: 10 mm |
| | Measured X-ray: Rh (4.0 kw) 50 kv 72 mA |
| | (2θ = from 0 to 90) |
| | Film measurement surface: measured by injecting the X-ray from the barrier coating film surface side |

### X-ray Photoelectron Spectroscopy

As a method for evaluating the chemical bond state of the elements contained in each of the gas barrier laminates produced in Examples and Comparative Examples, the constituent elements of the sample and the electronic states thereof can be analyzed by irradiating the sample surface with X-rays and measuring the energy of the generated photoelectrons. The nitrogen element and the zirconium element were analyzed by a commercially available X-ray photoelectron spectrometer. The binding energy of the element obtained by the measurement of each of the gas barrier laminates was analyzed with the peak position of Zr3d_{5/2} as 185.0, and the bond state of the nitrogen element in the coating film was evaluated. For the numerical value of Zr3d_{5/2} used for peak correction, reference was made to J. inorg. nucl. Chem. Vol. 43, No. 12, pp. 3329-3334, 1981.

**Measurement Conditions of X-ray Photoelectron Spectrometer**

| | |
|---|---|
| Apparatus used: | K-ALPHA available from Thermo Fisher Scientific |
| Measurement conditions: | Measurement element: Zr3d, N1s |
| | Peak correction: Zr3d_{5/2}: 185.0 |
| | X-ray type: Al monochromator |
| | Pass Energy: 150.0 eV |
| | Measuring diameter: 400 µm |
| | Film measurement surface: barrier coating film surface |

Various measurement and evaluation results of the above Examples, Comparative Examples and Reference Examples are shown in Table 1 and Table 2.

**[Table 1-1]**

| | Anchor coat layer | Gas barrier coating material composition | | | |
|---|---|---|---|---|---|
| | | Metal oxide | | Phosphoric acid compound | |
| | | Types | Added amount (phr) | Types | Added amount (phr) |
| Example 1 | None | ZSL00120B | 100 | ↓ | 50 |
| Example 2 | A | ↓ | 100 | ↓ | 50 |
| Example 3 | B | ↓ | 100 | ↓ | 50 |
| Example 4 | B | ↓ | 100 | ↓ | 50 |
| Comparative Example 1 | None | ↓ | 100 | ↓ | 51 |
| Comparative Example 2 | None | ↓ | 100 | ↓ | 48 |
| Reference Example 1 | None | ZSL00120A | 100 | Phosphoric acid (75%) | 54 |
| Reference Example 2 | None | Barrier-free laminate film (12 µm PET/50 µm CPP) | | | |

**[Table 1-2]**

| | Gas barrier coating material composition | | |
|---|---|---|---|
| | Polyvalent metal carboxylate salt | | Applied amount |
| | Types | Added amount (phr) | (g/m²) |
| Example 1 | ↓ | 29 | 1.3 |
| Example 2 | ↓ | 29 | 2.0 |
| Example 3 | ↓ | 29 | 1.9 |
| Example 4 | ↓ | 29 | 2.1 |
| Comparative Example 1 | None | 0 | 1.1 |
| Comparative Example 2 | Glycine | 20 | 1.1 |
| Reference Example 1 | Aluminum glycinate | 29 | 1.0 |
| Reference Example 2 | Barrier-free laminate film (12 µm PET/50 µm CPP) | | |

**[Table 2-1]**

| | Infrared absorption spectrum maximum absorption wave number | X-ray fluorescence P-Kα/Zr-Kα | X-ray fluorescence P-Kα/Al-Kα | X-ray fluorescence evaluation |
|---|---|---|---|---|
| | (cm⁻¹) | | | |
| Example 1 | 1050 | 2.8 | 5.9 | Good |
| Example 2 | 1054 | 2.3 | 5.6 | Good |
| Example 3 | 1050 | 2.4 | 5.5 | Good |
| Example 4 | 1041 | 2.3 | 5.6 | Good |
| Comparative Example 1 | 1039 | 2.7 | ND | - |
| Comparative Example 2 | 1021 | 2.6 | ND | - |
| Reference Example 1 | 1097 | 2.7 | 5.7 | Good |
| Reference Example 2 | ND | ND | ND | - |

**[Table 2-2]**

| | XPS evaluation | Retort treatment | Oxygen transmission rate | Water vapor transmission rate |
|---|---|---|---|---|
| | | | (cc/m²•day•atm) (40°C, 90% RH) | (g/m²•day) (40°C, 90% RH) |
| Example 1 | 403 | Untreated | 0.8 | 0.4 |
| Example 2 | 404 | Untreated | 2.0 | 0.8 |
| Example 3 | 403 | Untreated | 3.8 | 1.3 |
| Example 4 | 404 | 121°C, 30 min | 20.1 | 4.5 |
| Comparative Example 1 | ND | Untreated | 0.4 | 5.9 |
| Comparative Example 2 | 403 | Untreated | 0.3 | 5.3 |
| Reference Example 1 | 404 | Untreated | 2.6 | 0.8 |
| Reference Example 2 | - | Untreated | 200 | 6.0 |

### Abbreviations in Tables

ZSL-00120B: crystalline zirconium oxide (carbonate salt type);
ZSL-00120A: crystalline zirconium oxide (nitrate type);
P-Kα/Zr-Kα: meaning the content ratio of the phosphorus element (P) derived from the phosphoric acid compound to the zirconium element (Zr) in the coating film;
P-Kα/Al-Kα: meaning the content ratio of the phosphorus element (P) derived from the phosphoric acid compound to the aluminum element (Al) in the coating film;
X-ray fluorescence evaluation: those in which the maximum wavelength of the infrared absorption spectrum is observed in the phosphate salts of 1000 cm⁻¹ to 1130 cm⁻¹ and at least polyvalent metal elements of aluminum and zirconium are detected by the X-ray fluorescence measurement are evaluated as good.

In Table 2, "ND" means "not detected". "-" means not measured.

### Industrial Applicability

The gas barrier coating material composition of the present invention is capable of forming a coating film with excellent oxygen barrier properties and water vapor barrier properties, and can be suitably used as a transparent high barrier packaging material.

### Reference Signs List

1 Base
2 Anchor coat layer
3 Gas barrier layer (Gas barrier film)
4 Moisture resistant resin layer

## Claims

1. A gas barrier coating material composition comprising:
a metal oxide;
a phosphoric acid compound; and
a polyvalent metal carboxylate salt soluble in phosphoric acid.

2. The gas barrier coating material composition according to claim 1, wherein the polyvalent metal carboxylate salt is composed of a polyvalent metal ion and an amine compound containing an organic carboxylic acid.

3. The gas barrier coating material composition according to claim 2, wherein the polyvalent metal ion is an aluminum ion.

4. The gas barrier coating material composition according to claim 2 or 3, wherein the amine compound is an amino acid.

5. The gas barrier coating material composition according to any one of claims 1 to 4, wherein the polyvalent metal carboxylate salt is aluminum glycinate.

6. The gas barrier coating material composition according to any one of claims 1 to 5, wherein the metal oxide is zirconium oxide.

7. The gas barrier coating material composition according to any one of claims 1 to 5, wherein the phosphoric acid compound is at least one of orthophosphoric acid, metaphosphoric acid, a polyphosphoric acid, or a cyclic polyphosphoric acid.

8. A gas barrier laminate comprising a coating film provided on a base, the coating film comprising the gas barrier coating material composition described in any one of claims 1 to 7.

9. The gas barrier laminate according to claim 8, wherein the coating film has an absorption peak at which infrared absorption reaches maximum in a range from 1000 to 1130 cm⁻¹ in an infrared absorption spectrum.

10. The gas barrier laminate according to claim 8 or 9, wherein the coating film comprises a metal oxide.

11. The gas barrier laminate according to any one of claims 8 to 10, wherein the coating film has a peak which reaches maximum in a range from 400 to 405 eV of binding energy of N as measured by XPS.

12. The gas barrier laminate according to any one of claims 8 to 11, wherein the coating film contains a polyamide condensate.

13. The gas barrier laminate according to any one of claims 8 to 12, wherein the coating film contains a polyvalent metal carboxylate salt.

14. The gas barrier laminate according to any one of claims 8 to 13, further comprising an anchor coat layer provided between the base and the coating film.

15. The gas barrier laminate according to any one of claims 8 to 14, wherein an oxygen transmission rate of the gas barrier laminate is 25 cc/m²•day•atm (at 40°C and 90% RH) or less, and a water vapor transmission rate of the gas barrier laminate is 5.5 g/m²•day (at 40°C and 90% RH) or less, in a case where the base is composed of a biaxially stretched polyester with a thickness of 12 µm, the coating film is formed in an applied amount of 1.0 g/m² on the base, and a non-stretched polypropylene film with a thickness of 50 µm is disposed on the coating film.
